# EUROPÄISCHE PATENTANMELDUNG

(11) **EP 1 707 952 A1**
(43) Veröffentlichungstag der Anmeldung: **04.10.2006**
(21) Anmeldenummer: 06003536.7
(22) Anmeldetag: 22.02.2006
(51) Int. Cl.: G01N 27/414

(54) **Gassensitiver Feldeffekttransistor mit Luftspalt und Verfahren zu dessen Herstellung**

(30) Priorität: 31.03.2005 DE 102005014763
(71) Anmelder: Micronas GmbH, 79108 Freiburg i. Br. (DE)
(72) Erfinder: Fleischer, Maximilian Dr., 85635 Höhenkirchen (DE); Lampe, Uwe Dr., 21614 Buxtehude (DE); Meixner, Hans Prof., 85540 Haar (DE); Pohle, Roland Dr., 85570 Herdweg (DE); Schneider, Ralf, 80639 München (DE); Simon, Elfriede Dr., 80639 München (DE)
(74) Vertreter: Patentanwälte Westphal, Mussgnug & Partner

(57) **Zusammenfassung**

Gassensitiver Feldeffekttransistor (FET) mit Luftspalt (5) zwischen einer Gate-Elektrode (6) mit mindestens einer gassensitiver Schicht (3) und mindestens einem Transistor (1) zum Auslesen mindestens eines Gassensorsignals, wobei der gassensitive Feldeffekttransistor die folgenden Elemente aufweist:
- einen flächig ausgebildeten Substrat (2), welches in seinen Randbereichen gleichmäßig verteilte punktförmige, gestreckte oder zumindest partiell umlaufende Abstandshalter mit einer durch diese zumindest teilweise umgebenen Vertiefung aufweist,
- eine in der Vertiefung positionierten gassensitiven Schicht mit ebener Oberfläche und mit einer Schichtdicke, die geringer als die Höhe der Abstandshalter über dem Grund der Vertiefung ist oder dieser maximal entspricht,
- mindestens einen Transistor (1) oder eine Kombination aus Transistor und einer potentialfreien Elektrode, welche über der gassensitiven Schicht, unter Ausbildung des Luftspaltes (5) auf den Abstandshaltern (4) positioniert und befestigt ist.

## Beschreibung

Die Erfindung betrifft einen Gassensitiven Feldeffekttransistor mit Luftspalt und Verfahren zu dessen Herstellung, zur Darstellung eines Gassensors dessen Signale an einer gassensitiven Schicht mittels des Feldeffekttransistors ausgelesen werden, wobei die genaue Einstellung eines zwischen einer und dem Kanalbereich eines Auslesetransistors betrachtet wird.

Das Funktionsprinzip von auf Feldeffekttransistoren basierten Gassensoren ist seit längerem bekannt. Es bietet gegenüber anderen Gassensortechnologien eine Reihe von Vorteilen insbesondere für ein breites Einsatzfeld, sowie geringe Produktions- und Betriebskosten. Besonders vorteilhaft sind die Ausführungen des Transistors, die mit SGFET (Suspended Gate Field Effect Transistor) und CCFET (Capacity Controlled Field Effect Transistor) bezeichnet werden. Sie sind charakterisiert durch einen Luftspalt zwischen Gate-Elektrode und Auslesetransistor. Das zu detektierende Gas diffundiert durch den Luftspalt und absorbiert an der sensitiven Schicht. Dadurch wird in dieser Schicht eine Potentialänderung erzeugt die eine Stromänderung im Auslesetransistor bewirkt.

Die genaue Justierung der sensitiven Schichten stellt eine kritische Größe beim Gassensor dar. Die Kontrolle der Luftspalthöhe ist jedoch entscheidend, da die Einkoppelkapazität in direktem Zusammenhang mit der Stärke des Signals des Gassensors steht. Da die Höhe des Luftspaltes zwischen Gate-Elektrode und Kanalbereich wesentlich das Einkoppelverhalten der durch die Gasabsorption verursachten Potentialänderung bestimmt, ist bei der Herstellung des Gassensors insbesondere auf die genaue Ausbildung des Luftspaltes zu achten. Insgesamt können durch exakte Einstellung des Luftspaltes die Reproduzierbarkeit des Ansprechverhaltens und die Sensitivität, sowie Bandbreite der zu detektierenden Gaskonzentrationen des Sensors verbessert werden.

Die Dicke der verwendeten sensitiven Schichten richtet sich nach der Art des gassensitiven Materialien und des zu detektierenden Gases. Die optimale Schichtdicke kann bei verschiedenen Materialien unterschiedlich ausfallen und ist somit zu beachten, da dies unter Umständen in die Dimensionierung des Luftspaltes mit einfließt.

Ein geeignetes Verfahren zur Darstellung unterschiedlicher Schichtdicken wird beispielsweise in der DE19956744 beschrieben. Es wird ein Aufbau in hybrider Flip-, Chip-Technologie mit einem Feldeffekttransistor dargestellt, der auf einem Silizium Bauteil basiert welches einen Gasführungskanal in sich aufweist und bei Herstellung auf eine großflächige sensitive Schicht aufgelegt wird. Dadurch stellt sich der gewünschte Abstand bzw. Luftspalt zwischen Siliziumbauteil und Substrat automatisch ein. Der Abstand wird durch die variable Höhe von Flip-Chip-Bumps anschließend nochmals kontrolliert eingestellt.

Nachteile bekannter Verfahren bestehen darin, dass jeweils die Gefahr einer Beschädigung der sensitiven Schicht bei der Herstellung besteht oder Sensormaterial in den Luftspalt eindringt, was zu einer Verstopfung des Diffusionskanals oder zu elektrischen Kurzschlüssen führen kann.

In Bild 7 ist schematisch ein Feldeffekttransistor zur Gasdetektion gemäß dem SGFET Aufbau dargestellt, wobei die elektrische Verschaltung mit einbezogen ist. Die Gassensitive Schicht (3) ist mit einer Gate-Elektrode (6) im Trägersubstrat (2) enthalten. Falls durch den Luftspalt (5) ein Zielgas an die Gassensitiven Schicht diffundiert, führt dies dort zu einer Änderung der Austrittsarbeit und zu einer Potentialänderung. Dieses Potential bzw. die Potentialänderung koppelt in den Transistor (1) in dessen Kanalbereich zwischen Source und Drain ein und führt dort zu einer Änderung des Stromes I_{DS}. Die Höhe des Luftspaltes kann über die Ausbildung der Polymerbumps mit eingestellt werden.

Der Erfindung liegt die Aufgabe zu Grunde einen Gassensor und ein Verfahren zu dessen Herstellung für die genaue Einstellung der Höhe eines Luftspaltes an einem gassensitiven Feldeffekttransistor bereitzustellen.

Die Lösung dieser Aufgabe geschieht durch die Kombination der Merkmale entsprechend der Ansprüche 1 bzw. 10.
Vorteilhaft Ausgestaltungen sind den Unteransprüchen zu entnehmen.

Der Erfindung liegt die Erkenntnis zu Grunde, dass bei dem Aufbaukonzept entsprechend der Erfindung ein Substrat mit einer gassensitiven Schicht sowie einem Transistor vor der abschließenden Montage zunächst getrennt voneinander behandelt werden können. Das rohe Substrat wird zunächst strukturiert wobei Abstandshalter ausgebildet werden, über die die Luftspalthöhe des Gassensors zwischen Transistor und sensitiver Schicht genau einstellbar ist.

Zum einen kann beim Einsatz größerer Schichtdicke für die gassensitive Schicht die Ausbildung von Abstandshaltern durch Strukturierung des Substrates mittels Material abtragender Verfahren erreicht werden wobei wiederum die Abstandshalter die genaue Einstellung eines gewünschten Luftspaltes gewährleisten. Die Höhen der Abstandshalter wird in der zu verwendenden Schichtdicke der gassensitiven Schicht und dem im CMOS-Prozess hergestellten Transistor angepasst. Zur Herstellung der Vertiefungen zwischen den Abstandshaltern eignen sich bekannte Verfahren wie Schleifen, Sägen, Sandstrahlen, lithographisches Trockenätzen oder nass-chemisches Ätzen. Als Material für ein Substrat eignet sich beispielsweise Glas, Keramik beispielsweise Aluminiumoxid, Silizium oder ein formbeständiges Polymer. Bei der Verwendung von Dünnschichten als gassensitive Schicht im Bereich von wenigen Mikro- oder Nanometern Dicke werden die Abstandshalter mittels Materialauftrag realisiert, was beispielsweise durch Kathodenzerstäubung, Aufdampfen oder Spray Coating realisierbar ist. Die Vertiefungen zwischen den im Randbereich des Substrates angeordneten Abstandshaltern können entsprechend der Schichtdicke der gassensitiven Schicht angepasst werden. Werden Abtragsverfahren wie Schleifen oder Sandstahlen eingesetzt so kann mit einer Genauigkeit von +/- 1 *µ*m gerechnet werden. Dies kann unter Umständen durch eine Nachbehandlung durch einen Dünnschichtaufbau verbessert werden. Somit lassen sich Genauigkeiten im Nanometerbereich erzielen. Im Anschluss an die vorbereitenden Maßnahmen für Substrat einerseits und Transistor andererseits werden diese beiden Elemente des gassensitiven Feldeffekttransistors mittel geeigneter Fügetechnologie wie Flip-Tip-Verfahren oder Klebe-Technologie zusammengefügt. Beim Einsatz von relativ dicken Schichten eröffnen sich Einsatzfälle von Sensoranordnungen wobei mehrere Sensoren auf einem Substrat dargestellt sind, so das zum Beispiel komplexe Vorgänge wie eine Brandgas Detektion oder die Kontrolle der Luftraumgüte bedient werden können.

Im Folgenden werden anhand von schematischen begleitenden Figuren Ausführungsbeispiele beschrieben. Die Figuren zeigen im Einzelnen:
- Fig. 1: einen Schnitt durch einen SGFET,
- Fig. 2: einen Schnitt durch einen CCFET,
- Fig. 3 und 4: jeweils einen Schnitt durch einen SGFET mit konstanter Luftspalthöhe trotz unterschiedlicher Schichtdicke der gassensitiven Schicht,
- Fig. 5 und 6: jeweils einen Schnitt durch einen CCFET mit konstanter Luftspalthöhe trotz unterschiedlicher Schichtdicke,
- Fig. 7: im Schnitt einen SGFET nach dem Stand der Technik mit schematischer Darstellung der Funktionsweise,
- Fig. 8, 9, 10, 11: eine Vorbereitung eines Substrates mittels eines Schleifprozesses, anschließende Beschichtung mit der sensitiven Schicht und anschließende Deckelung mit dem Transistor,
- Fig. 12, 13, 14, 15: die einzelnen Stufen eines Verfahrens für die Herstellung der Vertiefung durch Sandstrahlen, oder Ähnliches,
- Fig. 16: ein Diagramm in dem die Schichtdicke der gassensitiven Schichten gegen die Kohlendioxid Sensitivität aufgetragen ist,
- Fig. 17, 18, 19, 20: die verschiedenen Stufen eines Verfahrensablaufes bei dem in einem einzigen Substrat drei unterschiedlich tiefe Vertiefungen eingebracht werden, drei unterschiedlich starke gassensitive Schichten aufgebracht werden und anschließend unter Beibehaltung eines Luftspaltes der Transistor auf die Sensoranordnung mit den Abstandhaltern aufgebracht wird, und
- Fig. 21, 22, 23, 24, 25: zeigen ausgehend von einem unbehandelten Substrat in Figur 22 ein strukturiertes Substrat mit Abstandshaltern an den Eckpunkten des flächig ausgebildeten Substrates in Figur 23, die aufgebrachte sensitive Schicht, und in Figur 24 den entsprechenden Aufbau mit als Deckel aufgesetztem Transistor.

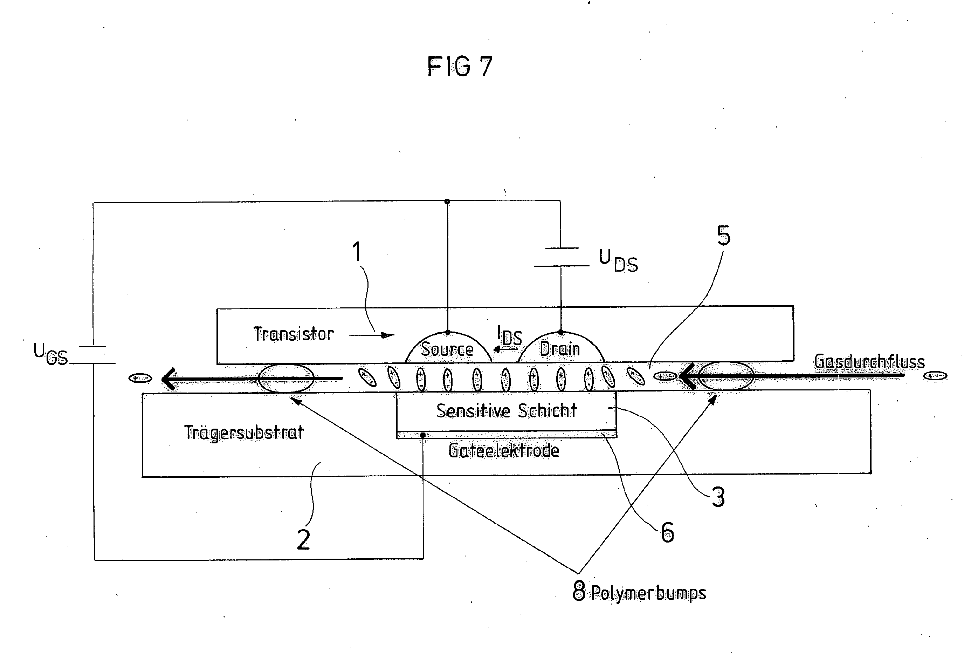

Die Figur 7 gibt den bekannten Stand der Technik in Form eines SGEFT wieder. Die Diffusion eines Zielgases durch den Luftspalt 5 die durch polarisierbare ovale Teilchen dargestellt ist erzeugt an der gassensitiven Schicht 3 ein bestimmtes Potential was auf den Kanal des Transistor 1 ankoppelt und den Strom zwischen Source und Drain (I_{DS}) verändert. Die gassensitive Schicht ist mit der Gate-Elektrode 6 verbunden. Die beiden abgreifbaren Spannungen liegen zum einen zwischen Drain und Source (U_{DS}) und zwischen Gate-Elektrode und Source (U_{GS}).

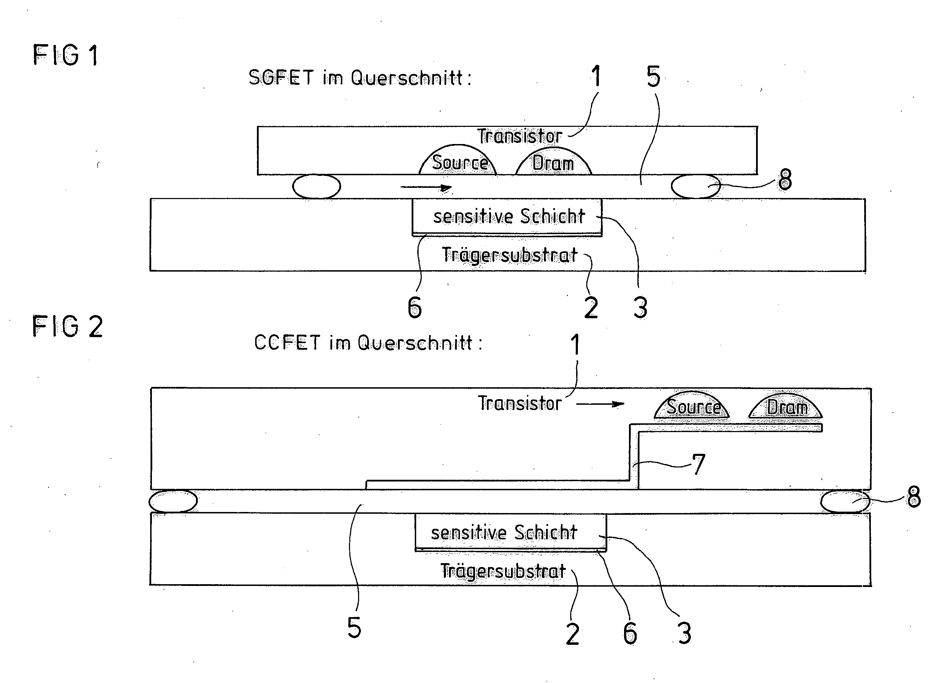

In den Figuren 1 bis 6 ist insgesamt die Erfindung dargestellt wobei der Schwerpunkt auf der Ausbildung von Abstandshaltern 4 am Substrat zu sehen ist. Sind die Anforderungen an eine Oberflächengenauigkeit der gassensitiven Schicht relativ gering so kann entsprechend der Figuren 1 und 2 die in das Trägersubstrat 2 eingebrachte Vertiefung von der Gassensitiven Schicht im anschließenden Schritt vollständig ausgefüllt werden, so dass diese bündig mit der Substratoberfläche abschließt. Figur 1 zeigt den Aufbau im SG-Feldeffekttransitor, Figur 2 zeigt den Aufbau in einem CC-Feldeffekttransistor wobei jeweils die Höhe des Luftspaltes durch Flip-Chip-Bumps bzw. Polymerbumps eingestellt wird.

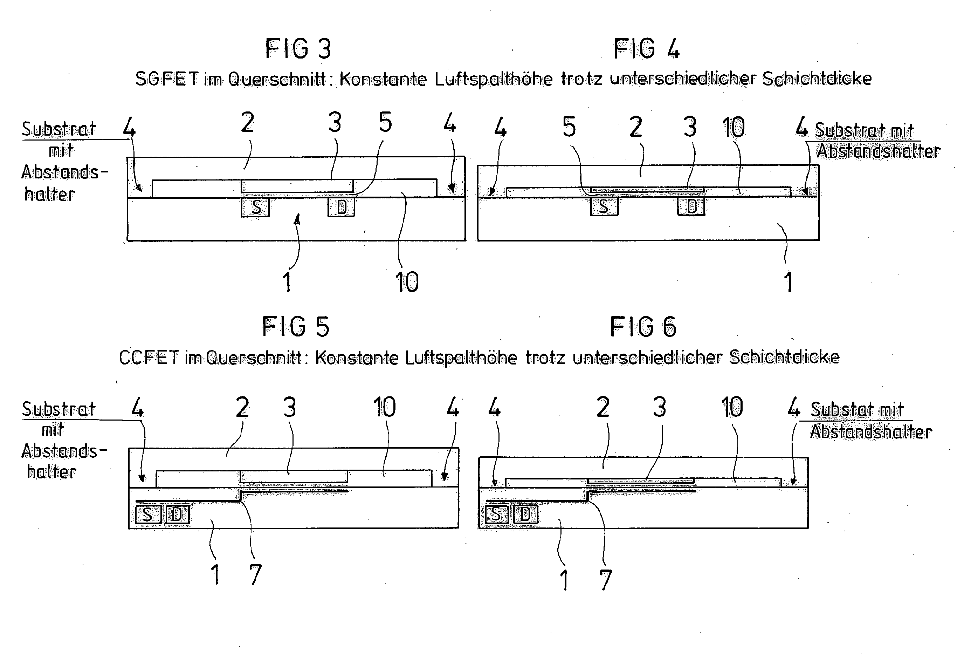

Eine Alternative zur Ausbildung eines genauen Luftspaltes in einem SG bzw. in einem CC Feldeffekttransistor zeigen die Figuren 3 bis 6. Den Figuren ist zu entnehmen, dass das Trägersubstrat 2 eine Vertiefung 10 aufweist, die mindestens so groß ist wie die flächige Ausdehnung der sensitiven Schicht 3 wobei im Randbereich des Substrates Abstandshalter 4 ausgebildet sind, die bei der Montage bei des Transistors 1 auf den Abstandshaltern 4 für eine Beabstandung der sensitiven Schicht von dem Kanalbereich des Transistors sorgen. Die gesamte Tiefe der Vertiefung 10 entspricht der Höhe der Abstandshalter 4 sowie diese über den Boden der Vertiefung nach oben ragen. Die Figuren 3 bis 6 zeigen jeweils Substrate 2 die mit der Vertiefung nach unten ausgerichtet sind.

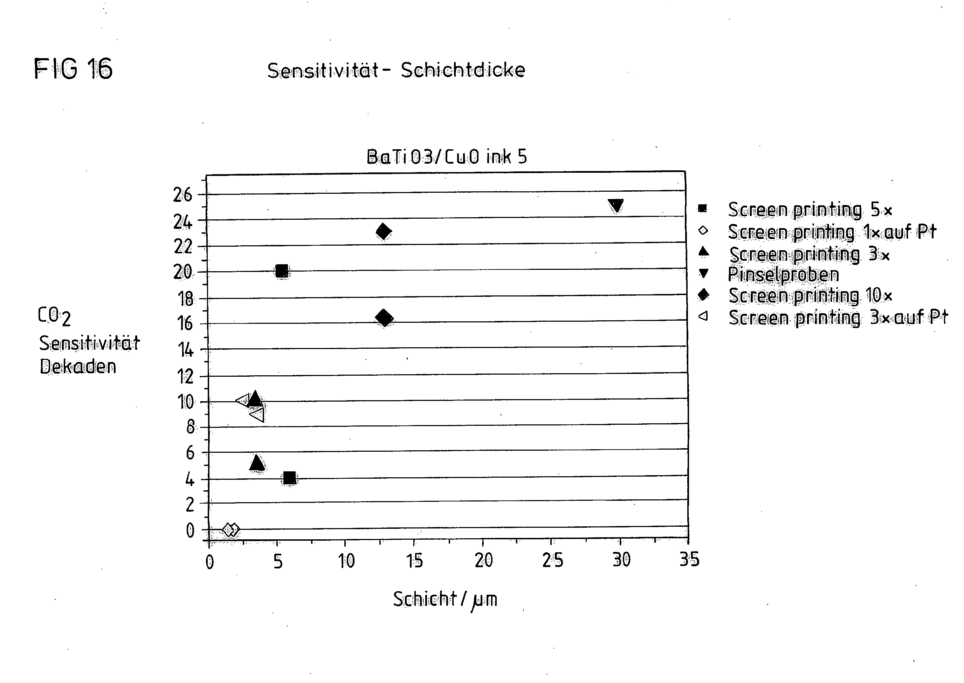

Figur 16 zeigt ein Diagramm, das die Verhältnisse zwischen der Schichtdicke von gassensitiven Schichten und der entsprechenden Kohlendioxid-Sensitivität am Beispiel des Bariumtitanat/Kupferoxydsystems aufzeigt. Die auf der Ordinate aufgetragene Sensitivität wird in Dekaden betrachtet. Neben den eingerahmten Diagramm sind verschiedene genormte Verfahrensweisen aufgetragen, die entsprechend der Symbole ein oder zwei M al aufgeführt sind. Es ist erkennbar dass sich eine optimale Sensitivität auf CO2 für bestimmte Detektionsmethoden erst bei höherer Schichtdicke ergibt.

Die Erfindung ergibt im Zusammenhang mit der Einstellung eines genauer vorgegebenen Luftspaltes die Vorteile einer genauen Positionierung der sensitiven Schicht relativ zum Transistor mit verbesserter Reproduzierbarkeit. Resultierend folgt eine bessere Signalauslesung sowie eine Steigerung der Selektivität durch die genaue Einstellung des Luftspaltes.

In Verbindung mit den Figuren 3 - 6 werden mögliche Realisierungsvarianten des Herstellungsverfahrens beschrieben:
1. Zur Strukturierung des Substrates 2 wird ein Materialabtrag durch Ätzen von photostrukturierbarem Glas vorgenommen. Dieses Glas wird ganzflächig mit einem lichtempfindlichen Photolack bedeckt. Die betroffenen Bereiche werden mittels Maske belichtet. Der Lack wird entwickelt. Das Glas wird erneut belichtet. Der verbliebene Lack wird entfernt. Die belichteten Flächen zwischen den Abstandshaltern werden auf die benötigte Tiefe herausgeätzt.
2. Strukturierung des Substrates durch Materialabtrag mittels Sandstrahlen. Das Material wird ganzflächig mit einem Lichtempfindlichen Photolack abgedeckt. Diese Bereiche werden mittels Maske belichtet. Der Lack wird entwickelt. Die Flächen zwischen den Abstandshaltern liegen offen und werden mittels Sandstrahlprozess auf die gewünschte Tiefe abgesenkt.
3. Die Strukturierung des Substrates geschieht durch Schleifen oder Sägen. Die Keramik wird schrittweise in Kreuzstruktur auf die benötigte Tiefe geschliffen bzw. gesägt.
4. Die Strukturierung des Substrates geschieht durch Materialauftrag zur Ausbildung der Abstandshalter durch Kathodenzerstäubung, Aufdampfen, Spray-Coating. Das Substrat wird ganzflächig mit einem Lichtempfindlichen Photolack abgedeckt. Die entsprechenden Bereiche werden mittels Maske belichtet. Der Lack wird entwickelt. Die Stellen für die Abstandshalter liegen offen. Gold, Platin oder andere Metalle werden bis zur vorgesehenen Höhe aufgebracht. Anschließend wird das nicht benötigte Material durch Ablösen des Photolackes (Lift-Off-Prozess) entfernt.

Für die unter 2. oder 4. angeführten Methoden sind beispielsweise Substratmaterialien wie Keramik, Glas, Silizium oder Glasfaserverstärktes Harz einsetzbar.

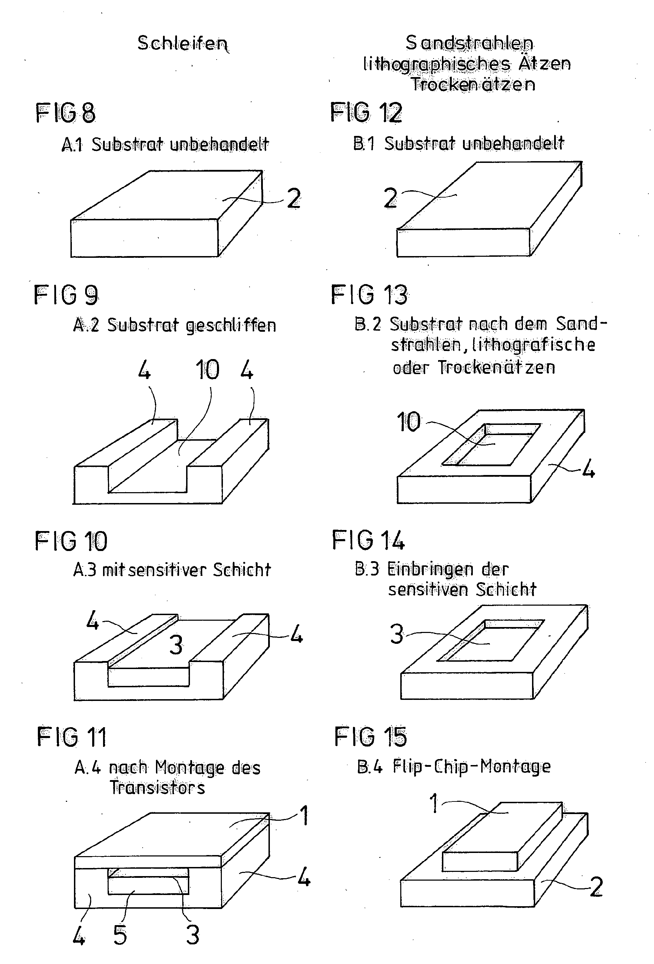

Entsprechend der Figuren 8 bis 11 soll verdeutlicht werden, das ausgehend von einem unbehandelten Substrat entsprechend Figur 8 durch einen Schleifvorgang eine Vertiefung 10 in das Substrat 2 einbringbar ist, die entsprechend Figur 10 mit der sensitiven Schicht 3 ausgefüllt wird, wobei die längs gestreckt ausgebildeten Abstandshalter als Rahmen dienen. Entsprechend Figur 11 wird bei der Deckelung der Vertiefung zwischen Transistor und gassensitiver Schicht ein Luftspalt 5 mit genauer Spaltbreite vorhanden sein. Eine andere Variante wird anhand der Figuren 12 bis 15 beschrieben, wobei anstelle von Schleifen oder Sägen Sandstrahlen, litographisches Trocken Ätzen oder nass-chemisches Ätzen verwendet wird.

Ausgehend von Figur 12 mit dem unbehandelten Substrat weist die Figur 13 eine Vertiefung 10 auf die von Abstandshaltern umgeben ist. In Figur 14 ist die Vertiefung mit entsprechender sensitiver Schicht in entsprechender Dicke ausgefüllt, so dass bei der Flip-Chip-Montage des Transistors ein Luftspalt mit exakter Spaltbreite ausgebildet wird. Die Gasdiffusion in einer Anordnung entsprechend Figur 15 geschieht entweder über poröse Teilbereiche des Substrates oder auch des Transistors oder über makroskopisch herausgearbeitete Gasdiffusionsgänge.

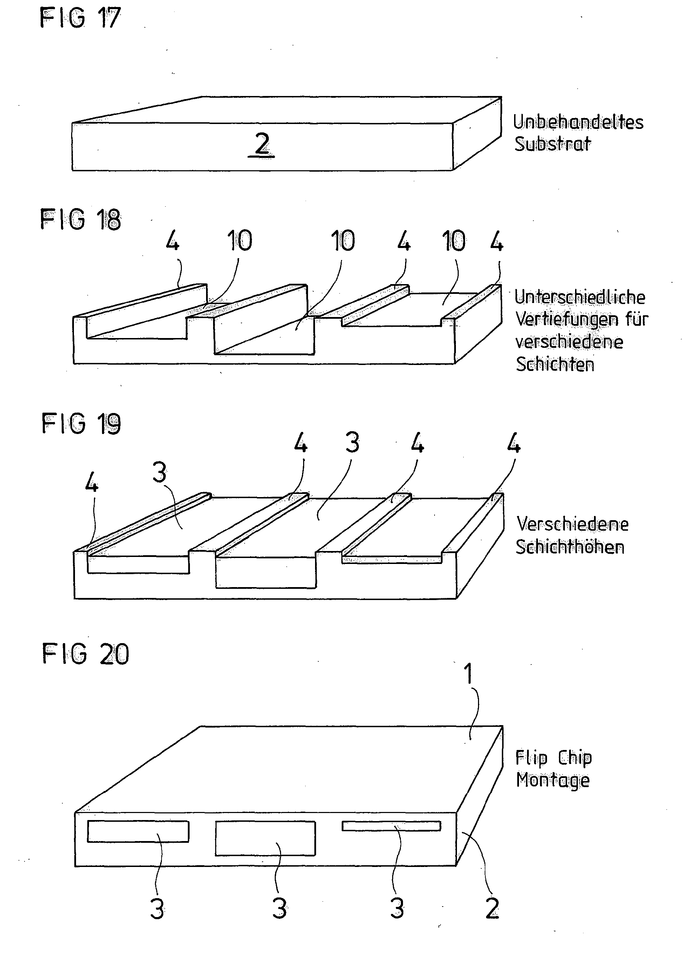

In den Figuren 17 bis 20 wird der gleiche beschriebene Ablauf dargestellt, wobei ausgehend von einem unbehandelten Substrat in Figur 17 mehrere unterschiedliche verschiedene Vertiefungen 10 herausgearbeitet werden. Diese Vertiefungen werden mit sensitivem Schichtmaterial aufgefüllt, entweder vollständig oder teilweise, so dass die Ausbildung eines vorgegebenen Luftspaltes vom Füllgrad der Vertiefung abhängt bzw. auch vom Flip-Chip-Bump 8 wie er in Figur 7 dargestellt ist. Die Anordnung entsprechend Figur 20 enthält insgesamt 3 Sensoren wobei nicht dargestellt ist, dass der Auslesetransistor entsprechend dreifach vorhanden sein muss.

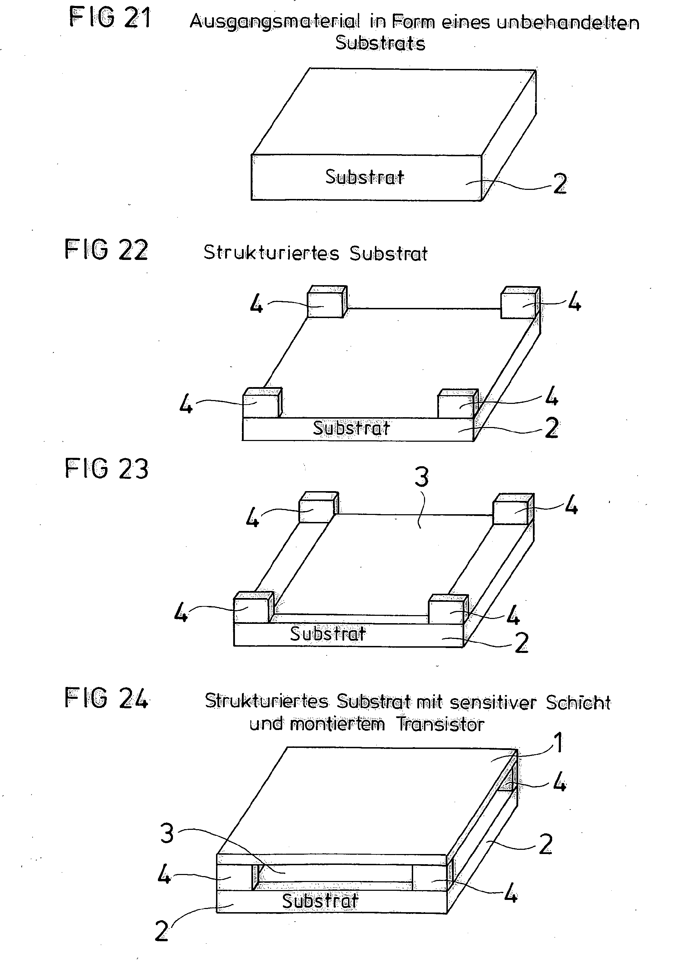

In Figur 22 ist ein strukturiertes Substrat mit Abstandshaltern 4 dargestellt, wobei das Material beispielsweise Keramik oder Glas sein kann. Die Dicke der sensitiven Schicht bedingt direkt die Tiefe der Vertiefung bzw. die Höhe der Aufbauten zur Darstellung von Abstandshaltern. Im Falle von relativ dicken Schichten erfolgt ein Materialabtrag in das Substrat hinein. Im Falle von dünnen aufzutragenden Schichten erfolgt ein Materialauftrag, wobei beispielsweise ein Metall wie Gold, Nickel oder Chrom durch Kathodenzerstäubung an den Orten der Abstandshalter aufgetragen wird. In beiden Fällen bilden sich an den Ecken Erhöhungen aus, die als Abstandshalter dienen.

Das strukturierte Substrat mit gassensitiver Schicht wird in Figur 23 dargestellt, wobei wiederum die Vertiefung 10 teilweise mit der sensitiven Schicht ausgefüllt wird. Die Abstandshalter 4 ragen über diese Schicht hinaus. Bei der folgenden Deckelung der Anordnung nach Figur 23 unter Einsatz der Flip-Chip-Technologie wird der Transistor 1 entsprechend montiert. Zwischen sensitiver Schicht und Transistor entsteht der gewünschte Luftspalt, der in diesem Fall mit genau ausgebildeten gleichmäßigen Abstandshaltern 4 hergestellt werden kann.

Eine Gate-Elektrode (6) ist lediglich in den Figuren 1, 2 und 7 angedeutet.

## Patentansprüche

1. Verfahren zur Herstellung einer gassensitiven Feldeffekttransistoranordnung (FET) mit Luftspalt (5) zwischen einer Gate-Elektrode (6) mit mindestens einer gassensitiver Schicht (3) und mindestens einem Transistor (1) zum Auslesen mindestens eines Gassensorsignals,
**dadurch gekennzeichnet, dass**
zur genauen Darstellung des Luftspaltes (5) folgende Herstellungsschritte vorgesehen sind:
- Ein flächig ausgebildetes Substrat (2) wird in einem mind. der flächigen Ausdehnung der jeweiligen gassensitiven Schicht (3) entsprechenden Bereich mit einer Vertiefung (10) versehen, die entweder durch ein Material abtragendes Verfahren oder durch ein Material auftragendes Verfahren oder einer Kombination daraus erzeugt wird, indem im Randbereich des Substrates gleichmäßig punktförmige, gestreckte oder zumindest partiell umlaufende Abstandshalter ausgebildet werden,
- in der zwischen den Abstandshaltern ausgebildeten Vertiefung wird die jeweilige gassensitive Schicht flächig mit ebener Oberfläche mit einer Schichtdicke aufgebaut, die geringer als die Höhe der Abstandshalter über dem Grund der Vertiefung ist oder dieser maximal entspricht,
- der Transistor (1) oder eine Kombination aus Transistor und einer potentialfreien Elektrode wird über der gassensitiven Schicht, unter Ausbildung des Luftspaltes (5) auf den Abstandshaltern (4) positioniert und befestigt.

2. Verfahren nach Anspruch 1, bei dem die Tiefe der Vertiefung gleich der Summe der Schichtdicke der gassensitiven Schicht (3) und der Schichtdicke des Luftspaltes (5) ist oder bei vollständiger Auffüllung der Vertiefung mit der gassensitiven Schicht die Luftspaltdicke mittels der Flip-Chip-Bumps eingestellt ist.

3. Verfahren nach einem der Ansprüche 1 oder 2, bei dem zur Bildung einer Sensoranordnung auf einem einzigen Substrat mehrere Vertiefungen für unterschiedliche sensitive Schichten eingebracht werden, die jeweils mit einem eigenen Auslesetransistor ausgestattet werden.

4. Verfahren nach Anspruch 3, bei dem unterschiedliche Vertiefungen (10) mit unterschiedlichen Tiefen im Substrat (2) eingebracht werden.

5. Verfahren nach Anspruch 4, bei dem unterschiedliche Tiefen der Vertiefungen im Substrat entsprechend der Dicken der gassensitiven Schichten vorgesehen sind, so dass für alle sensitive Schichten eine gleiche Luftspalthöhe eingerichtet werden kann.

6. Verfahren nach einem der Ansprüche 1 - 5, bei dem das Substrat aus Glas, photostrukturierbarem Glas, Silizium, Keramik, Metall oder einem Kunststoff besteht.

7. Verfahren nach einem der Ansprüche 1 - 6, bei dem als Material abtragendes Verfahren zur Erzeugung einer Vertiefung entweder Schleifen, Sägen oder Sandstrahlen, lithographisches Trockenätzen oder nasschemisches Ätzen eingesetzt wird.

8. Verfahren nach einem der Ansprüche 1 - 6, bei dem als Material auftragendes Verfahren zur Erzeugung eines Abstandshalters entweder Sputtern, Aufdampfen, Spray Coating eingesetzt wird.

9. Verfahren nach einem der Ansprüche 1 - 7, bei dem zur Auftragung der gassensitiven Schicht Verfahren wie Spray Coating, Spin Coating, Siebdruck, Tampondruck, Aufdampfen oder Kathodenzerstäubung eingesetzt werden.

10. Gassensitiver Feldeffekttransistor (FET) mit Luftspalt (5) zwischen einer Gate-Elektrode (6) mit mindestens einer gassensitiven Schicht (3) und mindestens einem Transistor (1) zum Auslesen mindestens eines Gassensorsignals,
**dadurch gekennzeichnet, dass**
der gassensitive Feldeffekttransistor aufgebaut ist aus:
- einem flächig ausgebildeten Substrat (2), welches in seinen Randbereichen gleichmäßig verteilte punktförmige, gestreckte oder zumindest partiell umlaufende Abstandshalter mit einer durch diese zumindest teilweise umgebenen Vertiefung aufweist,
- einer in der Vertiefung positionierten gassensitiven Schicht mit ebener Oberfläche und mit einer Schichtdicke, die geringer als die Höhe der Abstandshalter über dem Grund der Vertiefung ist oder dieser maximal entspricht,
- mindestens einem Transistor (1) oder einer Kombination aus Transistor und einer potentialfreien Elektrode, welche über der gassensitiven Schicht, unter Ausbildung des Luftspaltes (5) auf den Abstandshaltern (4) positioniert und befestigt ist.

11. Gassensitiver Feldeffekttransistor (FET) nach Anspruch 10, bei dem die Tiefe der Vertiefung gleich der Summe der Schichtdicke der gassensitiven Schicht (3) und der Schichtdicke des Luftspaltes (5) ist oder bei vollständiger Auffüllung der Vertiefung mit der gassensitiven Schicht die Luftspaltdicke mittels Flip-Chip-Bumps eingestellt ist.

12. Gassensitiver Feldeffekttransistor (FET) nach einem der Ansprüche 10 oder 11, bei dem zur Bildung einer Sensoranordnung auf einem einzigen Substrat mehrere Vertiefungen mit unterschiedlichen sensitiven Schichten vorhanden sind, die jeweils mit einem eigenen Auslesetransistor ausgestattet sind.

13. Gassensitiver Feldeffekttransistor (FET) nach Anspruch 12, bei dem unterschiedliche Tiefen der mehreren Vertiefungen (10) im Substrat (2) vorhanden sind

14. Gassensitiver Feldeffekttransistor (FET) nach Anspruch 13, bei dem unterschiedliche Tiefen der Vertiefungen im Substrat entsprechend der Dicken der gassensitiven Schichten vorgesehen sind so dass für alle sensitiven Schichten eine gleiche Luftspalthöhe vorhanden ist.

15. Gassensitiver Feldeffekttransistor (FET) nach einem der Ansprüche 10 - 14, bei dem das Substrat aus Glas, photostrukturierbarem Glas, Silizium, Keramik, Metall oder einem Kunststoff besteht.

16. Gassensitiver Feldeffekttransistor (FET) nach einem der Ansprüche 10 - 15, bei dem eine Vertiefung entweder durch Schleifen, Sägen oder Sandstrahlen, lithographisches Trockenätzen oder nass-chemisches Ätzen dargestellt ist.

17. Gassensitiver Feldeffekttransistor (FET) nach einem der Ansprüche 10 - 15, bei dem der Abstandshalter durch Sputtern, Aufdampfen, Spray Coating dargestellt ist.

18. Gassensitiver Feldeffekttransistor (FET) nach einem der Ansprüche 10 - 16, bei dem eine gassensitive Schicht durch Spray Coating, Spin Coating, Siebdruck, Tampondruck, Aufdampfen oder Kathodenzerstäubung dargestellt ist.
